# NEUE EUROPÄISCHE PATENTSCHRIFT

(11) **EP 1 130 071 B2**
(45) Veröffentlichungstag und Bekanntmachung des Hinweises auf die Entscheidung über den Einspruch: **07.10.2009**
(45) Hinweis auf die Patenterteilung: 28.04.2004
(21) Anmeldenummer: 01102759.6
(22) Anmeldetag: 08.02.2001
(51) Int. Cl.: C09J 133/00

(54) **Polymerblends**
Polymerblends
Mélanges de polymères

(30) Priorität: 25.02.2000 DE 10008842
(43) Veröffentlichungstag der Anmeldung: 05.09.2001
(73) Patentinhaber: TESA SE, 20253 Hamburg (DE)
(72) Erfinder: Husemann, Marc, Dr., 22605 Hamburg (DE); Zöllner, Stephan, Dr., 22043 Hamburg (DE)

(56) Entgegenhaltungen:
- EP-A- 0 017 364
- EP-A- 0 346 734
- EP-A- 0 621 326
- EP-B- 0 217 861
- WO-A-99/42536
- DE-A- 2 743 979
- DE-A- 3 942 232
- DE-C- 4 303 183
- US-A- 5 073 611
- US-A- 5 100 963
- US-A- 5 384 341
- PATENT ABSTRACTS OF JAPAN vol. 2000, no. 04, 31. August 2000 (2000-08-31) & JP 2000 007879 A (NIPPON SHOKUBAI CO LTD), 11. Januar 2000 (2000-01-11)
- 'Grundriss der Makromolekularen', CHEMIE Artikel BRUNO VOLLMERT,1985, Seiten 122 - 127
- DR.ALFRED HÜTHIG VERLAG KAUTSCHUK UND GUMMI, KUNSTOFFE HEIDELBERG,1987, Seiten 554 - 562
- HANDBOOK OF PRESSURE SENSITIVE: 'Adhesive Technology', SATAS, 1989 Seiten 402 - 411
- 'Kontinuierliche Schmelzklebstoffaufarbeitung und Klebebandherstellung', Bd. 8, ADHÄSION Seiten 231 - 236
- 'Makromoleküle', Bd. 1, 1990, HÜTHIG UND WEPF VERLAG, BASEL,HEIDELBERG,NEW YORK Artikel HANS GEORG ELIAS, Seiten 573 - 575

## Beschreibung

Die Erfindung betrifft ein Verfahren zur Herstellung von vernetzten Haftklebemassen.

Im Bereich der Haftklebemassen besteht ein fortlaufender Bedarf für Neuentwicklungen. Allgemein werden Haftklebemassen für Haftklebebänder eingesetzt, wobei das Klebeband aus einem Träger und einer Haftklebemasse besteht. Der Einsatz von Klebebändem ist sehr vielfältig. Ein Anwendungsfeld ist der medizinische Bereich. In Hautpflastem besteht ein direkter Kontakt zwischen Haftklebemasse und der Haut des Patienten. Für diese Anwendungen werden besonders hohe Anforderungen an die Haftklebemasse gestellt, da Hautreizungen und allergische Reaktion zu vermeiden sind, aber vielfach bei Patienten beobachtet werden. Der direkte Kontakt der Klebemasse zur Haut kann aber auch genutzt werden, z.B. durch die Implementierung von Wirkstoffen in der Haftklebemasse. Der Wirkstoff wird dann langsam über die Haut in den Patienten übertragen.

Ein weiterer großer Bereich sind die Anwendungen im industriellen Sektor. Beispielsweise werden doppelseitige Klebebänder zur Verklebung von Zierleisten in Automobilen, zur Verklebung von Elektronik-Chips oder zur Display-Verklebung in Handys genutzt. Für hochwertige industrielle Anwendungen werden Polyacrylathaftklebemassen bevorzugt, da diese transparent und witterungsstabil sind. Neben diesen Vorteilen müssen diese aber auch hohen Anforderungen im Bereich Scherfestigkeit gerecht werden. Dies wird durch Polyacrylate mit hohem Molekulargewicht und anschließender effizienter Vernetzung erreicht.

Neben der fortlaufenden Optimierung der Haftklebemassen werden aber auch die Auftragsverfahren für die Beschichtung der Träger optimiert. Durch den entstehenden Kostendruck verdrängen die Heißschmelzbeschichtungen (Hotmeltbeschichtungen) zunehmend die traditionellen Lösungsmittelbeschichtungsverfahren.

Bereits in den 70er Jahren wurden die ersten Acrylat-Schmelzhaftkleber in Patenten beschrieben. In den Schriften NL 66 06 711 und NL 70 09 629 wird zum ersten Mal der Einsatz von Polyacrylaten bzw. Poylacrylaten und Polymethacrylaten als Haftschmelzkleber in Haftklebebändem beschrieben. Verarbeitet wurden zumeist relativ unpolare Polyacrylate mit geringem Acrylsäureanteil und niedriger Fließviskosität. Durch eine effiziente Vernetzung auf dem Träger wurde versucht, die Problematik der Herstellung von hochscherfesten Klebemassen aus Acrylat-Hotmelts zu lösen. In der DE 27 43 979 A1 wurden z.B. Benzoinacrylate als Comonomer in den Acrylathotmelt einpolymerisiert und nach der Beschichtung mit UV-Strahlung direkt auf dem Träger vernetzt. Ein ähnlicher Weg zur Herstellung und Verarbeitung von Acrylathotmelts wurde in der US 5,073,611 dargestellt. Hier wurden Benzophenon und Acetophenon als acrylierte Photoinitiatoren in die Acrylatpolymerkette eingebaut. Anschließend wurde mit UV-Strahlung vernetzt.

Eine weitere Methode zur effizienten Vernetzung der Acrylathaftkleber ist die Copolymerisation von Acrylaten mit elektronendrückenden Gruppen. Diese stabilisieren während der Vernetzung entstehende Radikale und erzielen somit nach der entsprechenden Bestrahlung mit UV-Licht oder Elektronenstrahlen hohe Vernetzungsgrade. Beispiele hierfür sind Tetrahydrofurylacrylate [EP 0 343 467 B1], tertiäre Amine enthaltende Monomere [WO 96/35725] und tertiäres N-Butylacrylamid als Monomer [US 5,194,455].

Zur Verringerung der Fließviskosität und Verbesserung der Verarbeitbarkeit von Haftschmelzklebem dient ebenfalls das Polymerblending mit Blockcopolymeren. Hier werden bevorzugt SIS- und SBS-Systeme (SIS: Styrol-lsopren-Styrol-Copolymere; SBS: Styrol-Butadien-Styrol-Copolymere) eingesetzt. In der WO 95/19393 wurde z. B. die Blendung solcher Blockcopolymere mit Polyacrylaten beschrieben, einhergehend mit einer Erhöhung der Klebrigkeit dieser Haftkleber.

Hingegen ist bisher noch nicht gelungen, hochmolekulare und hochpolare Acrylathotmelts im Extruder ohne Molekulargewichtsabbau zu verarbeiten, um nach der Extrusionsbeschichtung eine hochscherfeste Masse zu erhalten.

Die hohe Kohäsion von Polyacrylaten, die für Klebemassen verwendet werden, kann durch den hohen Anteil polarer Komponenten erklärt werden. Das durchschnittliche Molekulargewicht der Klebemassen liegt bei 1.000.000 g/mol. Durch die hohe Anzahl polarer Anteile ergibt sich eine hohe Fließviskosität, die die Verarbeitung im Extruder und die anschließende Beschichtung eines Trägers mit diesem Polymer erschwert. Bei hohen Temperaturen nimmt die Fließviskosität zwar wieder ab, bei zu hohen Temperaturen kommt es jedoch zu Schädigungen des Polymers. Dieser Prozeß führt zu einer unerwünschten Verschlechterung der Klebeeigenschaften des Produktes.

Aufgabe der Erfindung ist es, ein Verfahren zur Verfügung zu stellen, wonach die Fließviskosität von Haftschmelzklebem bei gleichzeitiger Verbesserung des Klebeeigenschaftenprofils verringert werden kann. Die Verarbeitbarkeit der Haftschmelzkleber, insbesondere für den Hotmelt-Prozeß und im Extruder, soll dadurch optimiert werden. Weiterhin soll es möglich sein, die Polymermischung nach der Verarbeitung zu vernetzen.

Gelöst wird die Aufgabe durch ein Verfahren, wie es im Hauptanspruch dargestellt ist. Die Unteransprüche betreffen vorteilhafte Ausführungsformen dieses Verfahrens sowie die Anwendung der mit diesem Verfahren verarbeiteten Polyacrylate.

Demgemäß betrifft die Erfindung ein Verfahren zur Herstellung von vernetzten Haftklebemassen in welchem
a) einem Polyacrylat, einem Polyacrylatcopolymer, einem Polyacrylatgemisch oder einem Gemisch von Polyacrylaten und Polyacrylatcopolymeren mit einem mittleren Molekulargewicht M_{w} welches zwischen 500.000 g/mol und 4.000.000 g/mol liegt,
b) ein Polyacrylatcopolymer mit einem mittleren Molekulargewicht M_{w} zwischen 200.000 und 400.000 g/mol zugesetzt wird,
wobei die Komponente (b) einpolymerisierte UV-Photoinitiatoren besitzt, in der so hergestellten Mischung durch ultraviolette Bestrahlung die Komponente (b) vorvemetzt wird und in einem folgenden Schritt eine Vernetzung der bereits vorvemetzten Komponente (b) mit der Komponente (a) mittels Elektronenstrahlen erzielt wird.

Vorteilhaft ist es, wenn die Vernetzung der Komponente (b) mit der Komponente (a) durch Elektronenstrahlen hervorgerufen wird.

Es bietet sich an, daß als Komponente (a) Polyacrylatcopolymere aus den folgenden Monomeren
a1) Acrylsäureester und/oder Methacrylsäureester der folgenden Formel

   CH₂ = C(R₁)(COOR₂),

   wobei R₁ = H oder CH₃ und R₂ eine Alkylkette mit 1 - 20 C-Atomen ist, zu 75 - 100 Gew.-%, insbesondere 86 - 90 Gew.-%, bezogen auf die Komponente (a),
a2) Acrylsäure und/oder Methacrylsäure der folgenden Formel

   CH₂ = C(R₁)(COOH),

   wobei R₁ = H oder CH₃,
   zu 0 10 Gew.-%, insbesondere 4 - 6 Gew.-%, bezogen auf die Komponente (a),
a3) olefinisch ungesättigte Monomere mit funktionellen Gruppen,
   zu 0 15 Gew.-%, insbesondere 6 - 8 Gew.-%, bezogen auf die Komponente (a), zu 60 - 99 Gew.-%, bezogen auf die Gesamt-Polymermischung, eingesetzt werden.

Sehr gut verläuft das Verfahren, wenn als Komponente (b) zumindest ein Acrylatcopolymer mit einpolymerisiertem Photoinitiator zu 1 - 40 Gew.-%, bezogen auf die Gesamt-Polymermischung, eingesetzt wird.

In hervorragender Weise werden als Komponente (b) Copolymere der folgenden Zusammensetzung eingesetzt:
b1) Acrylsäureester und/oder Methacrylsäureester der folgenden Formel

   CH₂ = C(R₁)(COOR₂),

   wobei R₁ = H oder CH₃ und R₂ eine Alkylkette mit 1 - 20 C-Atomen ist, zu 70 - 99,99 Gew.-%, insbesondere zu 73 - 99,9 Gew.-%, bezogen auf die Komponente (b),
b2) Acrylsäure und/oder Methacrylsäure der folgenden Formel

   CH₂ = C(R₁)(COOH),

   wobei R₁ = H oder CH₃,
   zu 0 - 10 Gew.-%, bezogen auf die Komponente (b),
b3) olefinisch ungesättigte Monomere mit funktionellen Gruppen
   zu 0 15 Gew.-%, bezogen auf die Komponente (b),
b4) durch olefinische Doppelbindungen funktionalisierter Photoinitiator
   zu 0,01 - 5 Gew.-%, insbesondere zu 0,1 - 2 Gew.-%, bezogen auf die Komponente (b),
   zu 1 - 40 Gew.-%, bezogen auf die Gesamt-Polymermischung.

Weiterhin wird eine besonders vorteilhafte Variante des Verfahrens durch eine Vorgehensweise wiedergegeben, bei der die Polymerisation der Monomeren zum Gemisch der Polyacrylate in Gegenwart der Komponente (b) stattfindet.

Das nach einem dieser Verfahren hergestellte Polyacrylat kann hervorragend als Haftklebemasse verwendet werden. Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Gewebe und Gewebefolien sowie gegebenenfalls Trennpapier verwenden. Diese Aufzählung soll nicht abschließend sein.

Die dargestellte Erfindung ist sehr gut geeignet, die beschriebenen Aufgaben zu lösen. Es wird eine Polymermischung vorgestellt, deren Fließviskosität, verglichen mit derjenigen der zugrunde liegenden Haftklebemasse, deutlich herabgesetzt, deren Klebeeigenschaften jedoch gleichzeitig verbessert wurden, indem zwei Polyacrylat-Komponenten unterschiedlichen mittleren Molekulargewichtes miteinander vermischt werden.

Das höhermolekulare Polyacrylat kann z.B. jedes Polymer sein, welches Klebeigenschaften entsprechend dem Handbook of Pressure-sensitive Adhesives, p. 172, §1, 1989 aufweist. Mit einem mittleren Molekulargewicht von 1.000.000 g/mol weisen diese Klebemassen eine hohe Viskosität auf. Für das beschriebene Verfahren eignen sich Polyacrylate mit einem mittleren Molekulargewicht zwischen 500.000 und 2.000.000 g/mol besonders gut.

Verringert werden kann die Viskosität durch die Zugabe einer niederviskosen Komponente, die im Verarbeitungsschritt als Gleitmittel dient, aber anschließend auf dem Träger , vemetzt werden kann. Dazu lassen sich gut Acrylatcopolymere verwenden, in die ein Photoinitiator einpolymerisiert ist und die daher durch Bestrahlung mit ultraviolettem Licht für eine Vemetzungsreaktion aktiviert werden können. Als Photoinitiatoren können hierbei dem Fachmann die hierfür einschlägig bekannten Verbindungen verwendet werden, folgende Photoinitiatoren seien hier beispielhaft dargestellt, ohne sich damit beschränken zu wollen:
Benzophenone, Acrylierte öder methacrylierte Benzophenone, Benzophenon-Derivate, Thioxanthone, Benzilketale, α-Hydroxyalkylphenone, α-Aminoalkylphenone, Titanocene, Campherchinone, Trichloromethyltriazine und Thioxanthene.

Als entsprechend UV-aktivierbare Polymere lassen sich mit einer hohen Effizienz einige kommerziell erhältliche Produkte verwenden, die als Polymerblendingkomponenten technisch eingesetzt werden. Beispiele hierfür geben die acResins A 203 UV ® und A 258 UV ® [BASF AG]. Diese Polyacrylate haben ein Molekulargewicht von rund 300.000 g/mol und sind durch einen Photoinitiator UV-vernetzbar. Durch geringe polare Anteile und ein relativ niedriges Molekulargewicht besitzen diese Produkte eine relativ geringe Fließviskosität.

Im folgenden soll die Erfindung durch einige Beispiele näher erläutert werden, ohne damit die Erfindung unnötig einschränken zu wollen.

### Testmethoden

Folgende Testmethoden wurden angewendet, um die klebtechnischen Eigenschaften der hergestellten Haftklebemassen zu evaluieren.

### 180° Klebkrafttest (Test A)

Ein 20 mm breiter Streifen einer auf Polyester als Schicht aufgetragenen Acrylat-Haftklebemasse wurde auf zweimal mit Aceton und einmal mit Isopropanol gereinigten Stahlplatten aufgebracht. Der Haftklebestreifen wurde zweimal mit einem 2-kg-Gewicht auf das Substrat aufgedrückt. Das Klebeband wurde anschließend sofort mit 300 mm/min und im 180°-Winkel vom Substrat abgezogen und die hierzu benötigte Kraft gemessen. Alle Messungen wurden bei Raumtemperatur durchgeführt.
Die Meßergebnisse sind in N/cm angegeben und sind gemittelt aus drei Messungen.

### Scherfestigkeit (Test B)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20*13 mm² (Länge*Breite). Anschließend wurde mit konstantem Anpreßdruck das Klebeband viermal auf den Stahlträger gedrückt. Bei 70 °C wurde ein 0,5-kg-Gewicht an dem Klebeband befestigt, bei Raumtemperatur ebenfalls ein 1-kg-Gewicht.
Die gemessenen Scherstandzeiten sind in Minuten angegeben und entsprechen dem Mittelwert aus drei Messungen.

### Dynamisch-Mechanische Analyse, DMA (Test C)

Die Messungen wurden mit dem Gerät Dynamic Stress Rheometer von Rheometrics durchgeführt. Bei 130 °C wurde der mechanische Verlustfaktor tan δ in Abhängigkeit der Frequenz in einem Intervall von 0,1 bis 100 rad/s verfolgt. Es wurde mit paralleler Plattenanordnung gemessen.

### Herstellung der Proben

### Beispiel 1 (V1)

Ein für radikalische Polymerisationen konventioneller 2 L-Glasreaktor wurde mit 20 g Acrylsäure, 40 g Methylacrylat, 340 g 2-Ethylhexylacrylat, 133 g Benzin und 133 g Aceton befüllt. Nachdem für 45 Minuten Stickstoffgas unter Rühren durch die Reaktionslösung geleitet worden war, wurde der Reaktor auf 58 °C geheizt und 0,4 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Benzin Gemisch verdünnt. Nach 36 h Reaktionszeit wurde die Polymerisation abgebrochen und auf Raumtemperatur abgekühlt. Anschließend wurde das Polymer auf PET-Folie mit 50 g/m² aufgetragen, mit Elektronenstrahlen gehärtet und anschließend klebetechnisch mit Test A, B und C ausgetestet.

### Beispiel 2 (V2)

Es wurde analog Beispiel 1 vorgegangen. Zur Polymerisation wurden 20 g Acrylsäure, 40 g Methylacrylat, 40 g N-tert.-Butylacrylsäureamid und 296 g 2-Ethylhexylacrylat eingesetzt. Die Lösungsmittelmengen wurden beibehalten.

### Beispiel 3 (V3)

Es wurde analog Beispiel 1 vorgegangen. Zur Polymerisation wurden 20 g Acrylsäure, 4 g Maleinsäureanhydrid, 188 g n-Butylacrylat und 188 g 2-Ethylhexylacrylat eingesetzt. Die Lösungsmittelmengen wurden beibehalten.

### Beispiel 4 (V4)

Es wurde analog Beispiel 1 vorgegangen. Zur Polymerisation wurden 40 g Methylacrylat, 28 g Hydroxyethylacrylat, 20 g N-tert.-Butylacrylsäureamid und 312 g 2-Ethylhexylacrylat eingesetzt. Die Lösungsmittelmengen wurden beibehalten.

### Beispiel 5 (B1)

Ein für radikalische Polymerisationen konventioneller 2 L-Glasreaktor wurde mit 1.000 g Polymermasse V1 (50 % in Aceton/Benzin), mit 88,2 g acResin A 203 UV ® [BASF AG] und mit 592,4 g Toluol befüllt. Anschließend wurde auf 100 °C erhitzt und 1 h bei dieser Temperatur gerührt. Das Polymer-Polymer-Blend wurde auf PET Folie mit 50 g/m² aufgetragen, mit UV-Licht und Elektronenstrahlen gehärtet und letztendlich nach Test A, B und C klebetechnisch ausgetestet.

### Beispiel 6 (B2)

Es wurde analog Beispiel 5 vorgegangen. Zum Polymer-Polymer-Blending wurden 750 g V2 (50 % in Aceton/Benzin), 160,7 g acResin A 203 UV ® [BASF AG] und 628,5 g Toluol eingesetzt.

### Beispiel 7 (B3)

Es wurde analog Beispiel 5 vorgegangen. Zum Polymer-Polymer-Blending wurden 750 g V3 (50 % in Aceton/Benzin), 41,6 g acResin A 203 UV ® [BASF AG] und 398,9 g Toluol eingesetzt.

### Beispiel 8 (B4)

Es wurde analog Beispiel 5 vorgegangen. Zum Polymer-Polymer-Blending wurden 750 g V2 (50 % in Aceton/Benzin), 67,9 g acResin A 203 UV ® [BASF AG] und 447,6 g Toluol eingesetzt.

### Beispiel 9 (B5)

Es wurde analog Beispiel 5 vorgegangen. Zum Polymer-Polymer-Blending wurden 750 g V4 (50 % in Aceton/Benzin), 19,7 g acResin A 258 UV ® [BASF AG] und 358,0 g Toluol eingesetzt.

### Beispiel 10 (B6)

Es wurde analog Beispiel 5 vorgegangen. Zum Polymer-Polymer-Blending wurden 750 g V1 (50 % in Aceton/Benzin), 80,4 g C1 und 550,0 g Toluol eingesetzt.

### Beispiel 11 (B7)

Es wurde analog Beispiel 5 vorgegangen. Zum Polymer-Polymer-Blending wurden 750 g V2 (50 % in Aceton/Benzin), 160,7 g C2 und 628,5 g Toluol eingesetzt.

### Beispiel 12 (B8)

Ein für radikalische Polymerisationen konventioneller 2 L-Glasreaktor wurde mit 40 g Methylacrylat, 312 g 2-Ethylhexylacrylat, 28 g Hydroxyethylacrylat, 20 g N-tert.-Butylacrylsäureamid, 21,1 g acResin A 203 UV ® [BASF AG], 122,4 g Benzin und 122,4 g Aceton befüllt. Nach 45 Minuten Durchleiten mit Stickstoffgas unter Rühren wurde der Reaktor auf 58 °C hochgeheizt und 0,4 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Benzin Gemisch verdünnt. Nach 36 h Reaktionszeit wurde die Polymerisation abgebrochen und auf Raumtemperatur abgekühlt. Anschließend wurde das Polymer-Polymer auf PET-Folie mit 50 g/m² aufgetragen, mit UV und ESH gehärtet und letztendlich klebetechnisch mit Test A und B ausgetestet.

### Beispiel 13 (B9)

Es wurde analog Beispiel 12 vorgegangen. Zum Polymer-Polymer-Blending wurden 20 g Acrylsäure, 5 g Maleinsäureanhydrid, 188 g n-Butylacrylat, 188 g 2-Ethylhexylacrylat, 44,4 g acResin A 203 UV ® [BASF AG], 111,1 g Benzin und 111,1 g Aceton eingesetzt.

### Beispiel 14 (B10)

Es wurde analog Beispiel 12 vorgegangen. Zum Polymer-Polymer-Blending wurden 20 g Acrylsäure, 40 g Methylacrylat, 340 g 2-Ethylhexylacrylat, 70,6 g acResin A 203 UV ® [BASF AG], 97,7 g Benzin und 97,7 g Aceton eingesetzt.

### Beispiel 15 (C1)

Ein für radikalische Polymerisationen konventioneller 2 L-Glasreaktor wurde mit 18 g Acrylsäure, 40 g n-tert.-Butylacrylamid, 340 g 2-Ethylhexylacrylat und 2 g acryliertem Benzophenon Ebecryl P36 ® [UCB], 16 g Isopropanol, 133 g Benzin und 133 g Aceton befüllt. Nachdem für 45 Minuten Stickstoffgas unter Rühren durch die Reaktionslösung geleitet worden war, wurde der Reaktor auf 58 °C geheizt und 0,4 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Benzin Gemisch und 9 g Isopropanol verdünnt. Nach 24 h Reaktionszeit wurde die Polymerisation abgebrochen und auf Raumtemperatur abgekühlt.
Die GPC-Messung (Gelchromatographie) ergab ein mittleres Molekulargewicht von 280.000 g/mol.

### Beispiel 16 (C2)

Ein für radikalische Polymerisationen konventioneller 2 L-Glasreaktor wurde mit 14 g Acrylsäure, 160 g n-Butylacrylat, 160 g 2-Ethylhexylacrylat, 64 g Methylacrylat und 2 g Benzoinacrylat, 16 g Isopropanol, 133 g Benzin und 133 g Aceton befüllt. Nachdem für 45 Minuten Stickstoffgas unter Rühren durch die Reaktionslösung geleitet worden war, wurde der Reaktor auf 58 °C geheizt und 0,4 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Benzin Gemisch und 9 g Isopropanol verdünnt. Nach 22 h Reaktionszeit wurde die Polymerisation abgebrochen und auf Raumtemperatur abgekühlt.
Die GPC-Messung ergab ein mittleres Molekulargewicht von 250.000 g/mol.

### Resultate

Zunächst wurden verschiedene Haftklebemassen auf Polyacrylat-Basis hergestellt Die Comonomerzusammensetzung dieser Polyacrylate war sehr verschieden. Ein typisches Polymer enthielt 70 - 94 % unpolare Monomere, wie 2-Ethylhexylacrylat (2-EHA), n-Butylacrylat (n-BuA) und/oder längerkettige Alkylacrylate, 5 - 25 % polare Anteile, wie Methylacrylat (MA), Acrylsäure (AS) oder Hydroxyethylacrylat (HEA) und 0 - 10 % N-tert.-Butylacrylsäureamid (NTBAM). Folgende Monomerzusammensetzungen wurden in Lösung konventionell radikalisch mit 2,2'-Azobis(2-methylbutyronitril) polymerisiert und als Referenz für die Polymere klebtechnisch ausgeprüft (Tabelle 1):

**Tabelle 1**

| Beispiel | AS [%] | MA [%] | HEA [%] | NTBAM [%] | EHA [%] | BuA [%] | MSA [%] |
|---|---|---|---|---|---|---|---|
| V1 | 5 | 10 | 0 | 0 | 85 | 0 | 0 |
| V2 | 5 | 10 | 0 | 10 | 74 | 0 | 1 |
| V3 | 5 | 0 | 0 | 0 | 47 | 47 | 1 |
| V4 | 0 | 10 | 7 | 5 | 78 | 0 | 0 |

Zur klebtechnischen Ausprüfung wurden alle Klebemassen mit 50 g/m² auf Polyesterfolie beschichtet und anschließend mit Elektronenstrahlen vernetzt.

**Tabelle 2**

| Beispiel | SSZ 10 N [min] (Test B) | SSZ 5 N 70 °C [min] (Test B) | KK-Stahl [N/cm] (Test A) | KK-PE[N/cm] (Test A) |
|---|---|---|---|---|
| V1 | 10000 | 8339 | 4.5 | 1.2 |
| V2 | 10000 | 10000 | 4.6 | 1.1 |
| V3 | 10000 | 1254 | 5.2 | 1.4 |
| V4 | 7849 | 2418 | 4.7 | 1.2 |

SSZ: Scherstandzeiten
KK: Klebkraft

Die in Tabelle 2 aufgelisteten Beispiele V1 - V4 zeigen, daß alle gewählten Ausgangsmassen scherfest sind. Das mittlere Molekulargewicht der Klebemassen V1 - V4 liegt bei jeweils 1.000.000 g/mol.

Im folgenden wurden einige Polymere der Ausgangsverbindungen V1 - V4 mit unterschiedlichen Anteilen acResin A 203 UV ® und A 258 UV ® [BASF AG] gemischt und anschließend die Fließviskosität durch DMA-Messung gemessen. Für die ersten orientierenden Untersuchungen wurden Polymerblends bei 100 °C in Toluol unter Rühren in einem 2-L Glasreaktor hergestellt. In Tabelle 3 sind die Abmischungen aufgelistet:

**Tabelle 3**

| Blends | V [%] | acResin A 203 UV ® [%] | acResin A 258 UV ® [%] |
|---|---|---|---|
| B1 | V1 85 % | 15 % | |
| B2 | V2 70 % | 30 % | |
| B3 | V3 90 % | 10 % | |
| B4 | V2 85 % | 15 % | |
| 85 | V4 95 % | | 5 % |

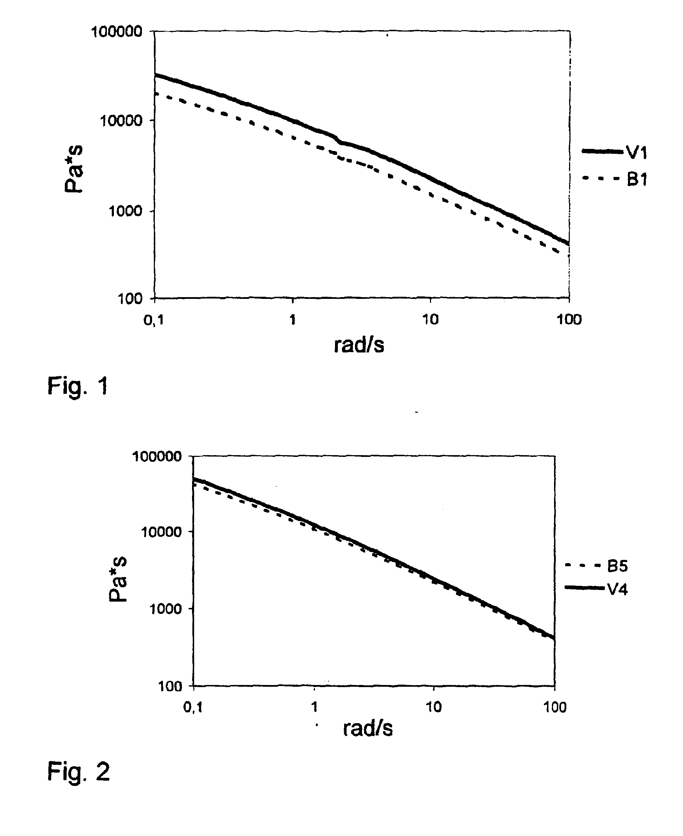

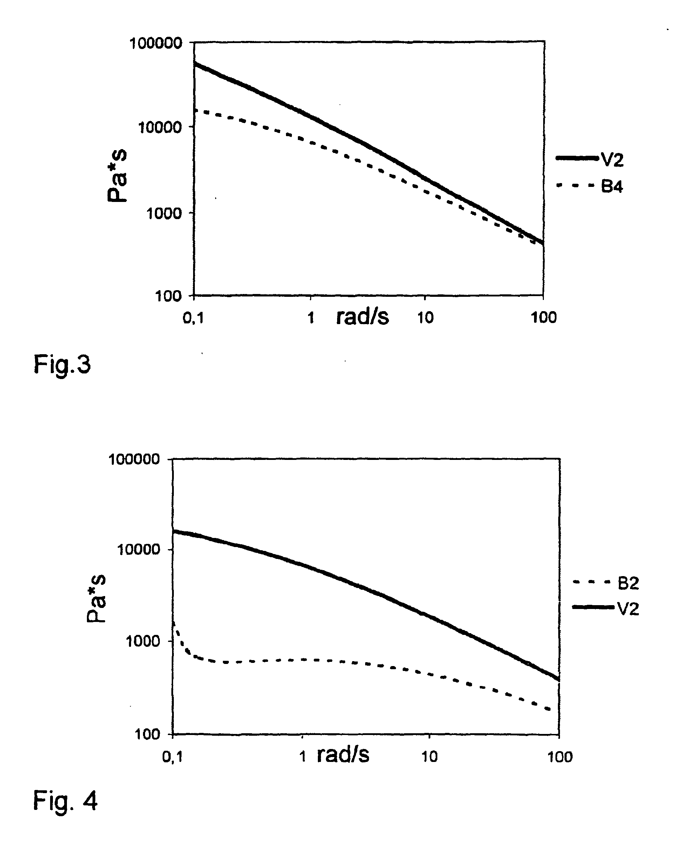

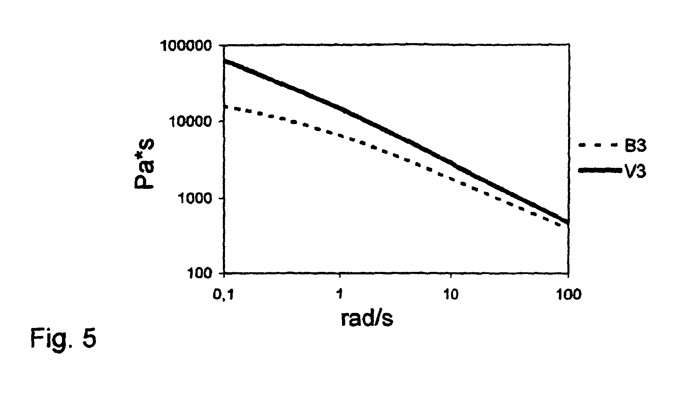

Anschließend wurde die Fließviskosität der Polymerblends B1 - B5 durch DMA-Messung gemessen und mit den ursprünglichen Polymeren V1 - V4 verglichen. Die Fließviskosität wurde durch DMA-Messung in einem Frequenzintervall von 0,1 bis 100 rad/s vermessen. Dabei wurde eine Meßtemperatur von 130 °C gewählt, da im Hotmelt-Verfahren hohe Temperaturen zur Beschichtung der Träger angewendet werden. Die Ergebnisse sind in den Figuren 1 - 5 gezeigt.

| | |
|---|---|
| Figur 1 | Fließviskosität des Biendes B1 und des Polyacrylates V1 bei 130 °C in einem Frequenzintervall zwischen 0,1 und 100 rad/s |
| Figur 2 | Fließviskosität des Blendes B5 und des Polyacrylates V4 bei 130 °C in einem Frequenzintervall zwischen 0,1 und 100 rad/s |
| Figur 3 | Fließviskosität des Blendes B4 und des Polyacrylates V2 bei 130 °C in einem Frequenzintervall zwischen 0,1 und 100 rad/s |
| Figur 4 | Fließviskosität des Blendes B2 und des Polyacrylates V2 bei 130 °C in einem Frequenzintervall zwischen 0,1 und 100 rad/s |
| Figur 5 | Fließviskosität des Blendes B3 und des Polyacrylates V3 bei 130 °C in einem Frequenzintervall zwischen 0,1 und 100 rad/s |

Der Vergleich der Fließviskositäten (Abbildung 1 - 5) zeigt, daß durch das Polymerblending mit acResins A 203 UV ® und A 258 UV ® [BASF AG] die Fließviskosität herabgesetzt wird. Der Effekt ist für den 5%igen Zusatz gering, wird aber immer größer mit Zunahme des niedermolekularen Anteils. Bei 30 % Zusatz (s. Blend 2) verringert sich die Fließviskosität bei 1 rad/s nahezu um den Faktor 10. Blend 2 besitzt ebenfalls in Lösung eine extrem geringe Fließviskosität. Im Aufkonzentrationsschritt und in der anschließenden Beschichtung werden die Vorteile deutlich: B2 benötigt zur Aufkonzentration im Extruder eine bedeutend niedrigere Heiztemperatur im Vergleich zu V2. Um den gleichen Durchsatz zu erreichen, wird eine um 20 °C geringere Aufkonzentrationstemperatur benötigt. Weiterhin läßt sich bei der gleichen Temperatur für den Blend B2 ein um 20 % höherer Durchsatz erzielen. Der Blend wird also thermisch nicht so stark belastet und die Schädigung des Polymers kann verringert werden.

Neben der Verringerung der Fließviskosität sind auch die klebtechnischen Eigenschaften von Interesse. Üblicherweise verschlechtern sich diese durch die Zugabe von Weichmachem. Insbesondere die Scherfestigkeit der Klebemasse nimmt deutlich ab.

Zur genaueren Prüfung wurden weitere niedermolekulare UV-vemetzende Poylacrylate hergestellt. In der DE 27 43 979 A1 wurde über den Einfluß von copolymerisiertem Benzoinacrylat auf die UV-Vemetzung von Polyacrylaten berichtet. In Analogie hierzu wurden zwei Polyacrylate mit folgender Zusammensetzung polymerisiert (Tabelle 4):

**Tabelle 4**

| Beispiel | AS [%] | MA [%] | NTBAM [%] | EHA [%] | Photoinitiator [%] | BuA [%] | M_{w} [g/mol] |
|---|---|---|---|---|---|---|---|
| C1 | 4.5 | 0 | 10 | 85 | 0.5 A | 0 | 280000 |
| C2 | 3.5 | 16 | 0 | 40 | 0.5 B | 40 | 250000 |
| A = acryliertes Benzophenon Ebecryl P 36 ® [UCB]; B = acryliertes Benzoinacrylat | | | | | | | |

Durch Zusatz von Isopropanol als Regler in der freien radikalischen Polymerisation wurde das mittlere Molekulargewicht auf unter 300.000 glmol herabgesetzt.
Anschließend wurden die Massen V1 und V2 mit den derart hergestelten UV-härtbaren Polyacrylaten gemischt (s. Tabelle 6):

**Tabelle 6**

| Blends | V [%] | C1 [%] | C2 [%] |
|---|---|---|---|
| B6 | V1 85 % | 15% | |
| B7 | V2 70% | | 30% |

Anschließend wurden die Blends B1 - B7 im Hinblick auf die Klebeeigenschaften ausgetestet. Zur Vernetzung wurden die Blends mit UV-Licht bestrahlt und anschließend durch Bestrahlung mit Elektronenstrahlen nachgehärtet. Durch die UV-Bestrahlung werden die acResins A 203 UV ® bzw. A 258 UV ® [BASF AG] oder C1 bzw. C2 aktiviert, und die relativ niedermolekularen Polymere reagieren miteinander, um längerkettige Polymere zu bilden. Anschließend wird der Polymerblend noch mit Elektronenstrahlen nachgehärtet. Die Elektronenstrahlhärtung (ESH) erzeugt bevorzugt Radikale an den langen Polymerketten und bildet ein zweites Netzwerk aus. Somit wird durch die ESH das UV-Netzwerk nochmals in ein größeres Netzwerk eingebaut. Der umgekehrte Prozeß funktioniert aber ebenfalls - nur mit einer schlechteren Effizienz.

Daß der Prozeß der UV-Vemetzung mit anschließender ESH sehr effektiv verläuft, zeigen die Ergebnisse der klebtechnischen Ausprüfungen in Tabelle 7:

**Tabelle 7**

| Blend | SSZ 10 N RT [min] | SSZ 5 N 70 °C [min] | KK-Stahl [N/cm] | KK-PE [N/cm] |
|---|---|---|---|---|
| B1 | +10000 | +10000 | 5.8 | 1.9 |
| B2 | +10000 | +10000 | 6.1 | 2.0 |
| B3 | +10000 | 2341 | 6.5 | 2.5 |
| B4 | +10000 | +10000 | 4.9 | 1.5 |
| B5 | +10000 | 4837 | 4.8 | 1.1 |
| B6 | +10000 | +10000 | 5.6 | 1.8 |
| B7 | +10000 | +10000 | 5.9 | 2.0 |

Blend B1 zeigt im Vergleich zur nicht-geblendeten Basismasse ein ähnliche Scherfestigkeit. In beiden Schertesten werden Scherstandzeiten größer 10.000 Minuten erreicht. Beim Vergleich der Klebkräfte zeigt sich, daß durch den niedermolekularen Anteil des acResins die Klebkraft auf Stahl und PE deutlich ansteigt. Somit erhält man neben der Verringerung der Fließviskosität auch eine Verbesserung der Klebkräfte bei gleichbleibendem Niveau in der Scherfestigkeit. Der Vergleich mit den Blends B2 - B5 zeigt einen ähnlichen Trend. Blend B2 hat die gleiche Scherfestigkeit wie das Ausgangspolymer V2, zeigt aber im Klebkraft-Bereich mit 6,1 N/cm auf Stahl und mit 2,0 N/cm auf PE eine deutliche Verbesserung. Das gleiche gilt für die Blends B3 und B4. Blend B5 wurde dagegen etwas stärker UV-vernetzt. Als Resultat blieben die Klebkräfte auf gleichem Niveau, dagegen wurde aber eine Verbesserung in den Scherstandzeiten gemessen. Für Blend 6 und 7 wurden ähnliche Ergebnisse wie bei Blend 1 und 2 gefunden. Offensichtlich ist das Prinzip des Polymerblendings mit einer UV-vemetzenden Acrylatklebemasse nicht vom UV-Photoinitiator abhängig.

Zusammenfassend wird durch die Zugabe des acResins A 203 UV oder A 258 UV (je nach Menge) oder eines entsprechenden UV-vemetzbaren Acrylat-Copolymer mit einem niedrigen mittleren Molekulargewicht (< 500.000 g/mol) deutlich die Fließviskosität herabgesetzt Durch den Grad der Härtung können die klebtechnischen Eigenschaften eingestellt werden. Bei mittlerer UV-Härtung bleiben die Scherstandzeiten auf gleichem Niveau, und die Klebkräfte steigen an. Dagegen wird bei starker UV-Vernetzung eine verbesserte Kohäsion aufgebaut, und die Klebkräfte verbleiben auf dem gleichen Niveau.

## Patentansprüche

1. Verfahren zur Herstellung von vernetzten Haftklebemassen, **dadurch gekennzeichnet, dass**
a) einem Polyacrylat, einem Polyacrylatcopolymer, einem Polyacrylatgemisch oder einem Gemisch aus Polyacrylaten und Polyacrylatcopolymeren mit einem mittleren Molekulargewicht M_{w}, welches zwischen 500.000 und 4.000.000 g/mol liegt,
b) ein Polyacrylatcopolymer mit einem mittleren Molekulargewicht M_{w} zwischen 200.000 und 400.000 g/mol zugesetzt wird,
wobei die Komponente (b) einpolymerisierte UV-Photoinitiatoren besitzt,
c) in der so hergestellten Mischung durch ultraviolette Bestrahlung die Komponente (b) vorvernetzt wird und
d) in einem folgenden Schritt eine Vernetzung der bereits vorvernetzten Komponente (b) mit der Komponente (a) mittels Elektronenstrahlen erzielt wird.

2. Verfahren nach Anspruch 1, **dadurch gekennzeichnet, dass**
als Komponente (a) Polyacrylatcopolymere aus den folgenden Monomeren
a1) Acrylsäureester und/oder Methacrylsäureester der folgenden Formel
CH₂ = C(R₁)(COOR₂),
wobei R₁ = H oder CH₃ und R₂ eine Alkylkette mit 1 - 20 C-Atomen ist,
zu 75 - 100 Gew.-%, bezogen auf die Komponente (a),
a2) Acrylsäure und/oder Methacrylsäure der folgenden Formel
CH₂ = C(R₁)(COOH),
wobei R₁ = H oder CH₃,
zu 0 - 10 Gew.-%, bezogen auf die Komponente (a),
a3) olefinisch ungesättigte Monomere mit funktionellen Gruppen,
zu 0 - 15 Gew.-%, bezogen auf die Komponente (a),
zu 60 - 99 Gew.-%, bezogen auf die Gesamt-Polymermischung, eingesetzt wird.

3. Verfahren nach einem der oberen Ansprüche, **dadurch gekennzeichnet, dass**
als Komponente (a) Polyacrylatcopolymere aus den folgenden Monomeren
a1) Acrylsäureester und/oder Methacrylsäureester der folgenden Formel
CH₂ = C(R₁)(COOR₂),
wobei R₁ = H oder CH₃ und R₂ eine Alkylkette mit 1 - 20 C-Atomen ist,
zu 86 - 90 Gew.-%, bezogen auf das Gemisch unter Punkt a),
a2) Acrylsäure und/oder Methacrylsäure der folgenden Formel
CH₂ = C(R₁)(COOH),
wobei R₁ = H oder CH₃,
zu 4 - 6 Gew.-%, bezogen auf das Gemisch unter Punkt a),
a3) olefinisch ungesättigte Monomere mit funktionellen Gruppen,
zu 6 - 8 Gew.-%, bezogen auf das Gemisch unter Punkt a),
zu 60 - 99 Gew.-%, bezogen auf die Gesamt-Polymermischung, eingesetzt wird.

4. Verfahren nach einem der oberen Ansprüche, **dadurch gekennzeichnet, dass**
als Komponente (b) Copolymere der folgenden Zusammensetzung
b1) Acrylsäureester und/oder Methacrylsäureester der folgenden Formel
CH₂ = C(R₁)(COOR₂),
wobei R₁ = H oder CH₃ und R₂ eine Alkylkette mit 1 - 20 C-Atomen ist,
zu 70 - 99,99 Gew.-%, bezogen auf die Komponente (b),
b2) Acrylsäure und/oder Methacrylsäure der folgenden Formel
CH₂ = C(R₁)(COOH),
wobei R₁ = H oder CH₃,
zu 0 - 10 Gew.-%, bezogen auf die Komponente (b),
b3) olefinisch ungesättigte Monomere mit funktionellen Gruppen
zu 0 - 15 Gew.-%, bezogen auf die Komponente (b),
b4) durch olefinische Doppelbindungen funktionalisierter Photoinitiator
zu 0,01 - 5 Gew.-%, bezogen auf die Komponente (b),
zu 1 - 40 Gew.-%, bezogen auf die Gesamt-Polymermischung, eingesetzt werden.

5. Verfahren nach Anspruch 4, **dadurch gekennzeichnet, daß**
die Komponente (b4) zu 0,1 - 2 Gew.-%, bezogen auf die Komponente (b), eingesetzt wird.

## Claims

1. Method for producing crosslinked pressure-sensitive adhesive compositions, **characterized in that,**
a) to a polyacrylate, a polyacrylate copolymer, a polyacrylate mixture or a mixture of polyacrylates and polyacrylate copolymers having an average molecular weight M_{w} of between 500 000 and 4 000 000 g/mol
b) there is added a polyacrylate copolymer having an average molecular weight M_{w} between 200 000 and 400 000 g/mol, component (b) posessing copolymerized UV photoinitiators,
c) in the mixture thus prepared, component (b) is precrosslinked by ultraviolet radiation and
d) in a subsequent step, the already precrosslinked component (b) is crosslinked with component (a) by electron beams.

2. Method according Claim 1, **characterized in that** as component (a) there are used polyacrylate copolymers of the following monomers
a1) acrylates and/or methacrylates of the following formula
CH₂ = C(R₁)(COOR₂),
where R₁ = H or CH₃ and R₂ is an alkyl chain with 1 - 20 carbon atoms,
at 75 - 100% by weight, based on component (a),
a2) acrylic acid and/or methacrylic acid of the following formula
CH₂ = C(R₁) (COOH),
where R₁ = H or CH₃,
at 0 - 10% by weight, based on component (a),
a3) olefinically unsaturated monomers containing functional groups,
at 0 - 15% by weight, based on component (a),
at 60 - 99% by weight, based on the overall polymer blend.

3. Method according to one of the above claims, **characterized in that**
as component (a) there are used polyacrylate copolymers of the following monomers
a1) acrylates and/or methacrylates of the following formula
CH₂ = C(R₁) (COOR₂),
where R₁ = H or CH₃ and R₂ is an alkyl chain with 1 - 20 carbon atoms,
at 86 - 90% by weight, based on the mixture under item a),
a2) acrylic acid and/or methacrylic acid of the following formula
CH₂ = C(R₁) (COOH),
where R₁ = H or CH₃,
at 4 - 6% by weight, based on the mixture under item a),
a3) olefinically unsaturated monomers containing functional groups,
at 6 - 8% by weight, based on the mixture under item a),
at 60 - 99% by weight, based on the overall polymer blend.

4. Method according to one of the above claims, **characterized in that**
as component (b) there are used copolymers of the following composition
b1) acrylates and/or methacrylates of the following formula
CH₂ = C(R₁) (COOR₂),
where R₁ = H or CH₃ and R₂ is an alkyl chain with 1 - 20 carbon atoms,
at 70 - 99.99% by weight, based on component (b),
b2) acrylic acid and/or methacrylic acid of the following formula
CH₂ = C(R₁) (COOH),
where R₁ = H or CH₃,
at 0 - 10% by weight, based on component (b),
b3) olefinically unsaturated monomers containing functional groups,
at 0 - 15% by weight, based on component (b),
b4) photoinitiator functionalized by olefinic double bonds,
at 0.01 - 5% by weight, based on component (b),
at 1 - 40% by weight, based on the overall polymer blend.

5. Method according Claim 4, **characterized in that** component (b4) is used at 0.1 - 2% by weight, based on component (b).

## Revendications

1. Procédé pour la fabrication de masses adhésives de contact réticulées, **caractérisé en ce qu'**
a) on ajoute à un polyacrylate, un copolymère de polyacrylates, un mélange de polyacrylates ou un mélange de polyacrylates et de copolymères de polyacrylates d'un poids moléculaire moyen Mw entre 500 000 et 4 000 000 g/mole,
b) un copolymère de polyacrylates d'un poids moléculaire moyen Mw entre 200 000 et 400 000 g/mole, le composant (b) comportant des photo-initiateurs UV polymérisés,
c) dans le mélange ainsi préparé, le composant (b) est pré-réticulé par irradiation avec une lumière ultraviolette et
d) dans une phase suivante, se trouve réalisée une réticulation du composant (b) déjà pré-réticulé avec le composant (a) par irradiation avec un faisceau d'électrons.

2. Procédé selon la revendication 1, **caractérisé en ce que** l'on utilise, comme composant (a) des copolymères de polyacrylates constitué des monomères suivants :
a1) ester de l'acide acrylique et/ou de l'acide méthacrylique répondant à la formule suivante :
CH₂=C(R₁) (COOR₂)
dans laquelle R₁=H ou CH₃ et R₂ représente un groupement alkyle de 1 à 20 atomes de carbone,
à 75-100% en poids par rapport au composant (a)
a2) acide acrylique et/ou acide méthacrylique répondant à la formule suivante :
CH₂=C(R₁) (COOH)
dans laquelle R₁=H ou CH₃
à 0-10% en poids par rapport au composant (a)
a3) monomères oléfiniquement insaturés comportant des groupes fonctionnels,
à 0-15% en poids par rapport au composant (a)
à 60-99% en poids par rapport au mélange de polymères total.

3. Procédé selon l'une quelconque des revendications précédentes, **caractérisé en ce que** l'on utilise, comme composant (a) des copolymères de polyacrylates constitué des monomères suivants :
a1) ester de l'acide acrylique et/ou de l'acide méthacrylique répondant à la formule suivante :
CH₂=C(R₁) (COOR₂)
dans laquelle R₁=H ou CH₃ et R₂ représente un groupement alkyle de 1 à 20 atomes de carbone,
à 86-90% en poids par rapport au mélange sous (a)
a2) acide acrylique et/ou acide méthacrylique répondant à la formule suivante :
CH₂=C(R₁) (COOH)
dans laquelle R₁=H ou CH₃
à 4-6% en poids par rapport au mélange sous (a)
a3) monomères oléfiniquement insaturés comportant des groupes fonctionnels,
à 6-8% en poids par rapport au mélange sous (a)
à 60-99% en poids par rapport au mélange de polymères total.

4. Procédé selon l'une quelconque des revendications précédentes, **caractérisé en ce que** l'on utilise, comme composant (b) des copolymères de la composition suivante:
b1) ester de l'acide acrylique et/ou de l'acide méthacrylique répondant à la formule suivante :
CH₂=C(R₁) (COOR₂)
dans laquelle R₁=H ou CH₃ et R₂ représente un groupement alkyle de 1 à 20 atomes de carbone,
à 70-99,99% en poids par rapport au composant (b)
b2) acide acrylique et/ou acide méthacrylique répondant à la formule suivante :
CH₂=C(R₁) (COOH)
dans laquelle R₁=H ou CH₃,
à 0-10% en poids par rapport au composant (b)
b3) monomères oléfiniquement insaturés comportant des groupes fonctionnels,
à 0-15% en poids par rapport au composant (b)
b4) photo-initiateur fonctionnalisé par des doubles liaisons oléfiniques
à 0,01-5% en poids, par rapport au composant (b),
à 1-40% en poids par rapport au mélange de polymères total.

5. Procédé selon la revendication 4, **caractérisé en ce que** le composant (b4) est utilisé à 0,1-2% en poids par rapport au composant (b).
